# EUROPEAN PATENT APPLICATION

(11) **EP 4 843 693 A1**
(43) Date of publication of application: **25.11.2026**
(21) Application number: 26179914.2
(22) Date of filing: 20.05.2026
(51) Int. Cl.: B23D 59/00, B27B 5/065

(54) **LONGITUDINAL CIRCULAR SAW COMPRISING AN EXHAUST TUNNEL WITH AN INTEGRATED FLAP**

(30) Priority: 23.05.2025 CZ 20250226
(71) Applicant: Störi Mantel, s.r.o., 756 51 Zasová (CZ)
(72) Inventor: Fr ka, Pavel, 756 51 Za ová (CZ)
(74) Representative: Danek, Vilém

(57) **Abstract**

An integrated flap (10) of an extraction tunnel for a woodworking machine, which comprises a lower part (1) of the machine with a table (2) for holding the material being machined, a pair of columns (3, 4) or columns (3, 5), between which the upper extraction tunnel (6) is mounted; it further comprises protective adjustable slats (7) and an upper extraction branch (8) for dust extraction. The flap (10) is mounted so that it can be tilted within the upper extraction tunnel (6) of the machine at the location of the extraction branch (8) which is also mounted in the upper extraction tunnel (6). This flap (10) serves to more effectively seal off the extraction space in the cutting area, thereby reducing pressure losses and increasing the efficiency of dust and sawdust extraction.

## Description

### Technical Field

The invention relates to an integrated flap for an extraction tunnel that is part of a longitudinal circular saw (single-blade resaw).

### Prior Art

Currently, longitudinal circular saws designed for longitudinal cutting and resawing of material are commonly equipped with two systems for extracting dust and sawdust generated during cutting: a lower extraction tunnel and an upper extraction tunnel.

The upper extraction tunnel consists of a beam from which adaptable protective slats are freely suspended; these slats adjust to the height and shape of the material being cut. Once the cutting process begins, this tunnel is lowered toward the material being cut, causing the slats to form a partially enclosed space that serves as a channel for extracting dust and sawdust from the cutting zone.

The upper extraction tunnel serves multiple functions simultaneously:
- a safety function, as it creates a mechanical barrier between the work area and the moving cutting blade,
- enabling visual inspection of the cutting process thanks to the transparent design of the slats,
- increasing extraction efficiency, as the slats prevent the ingress of ambient air and thereby reduce the volume of secondary (false) air drawn in.

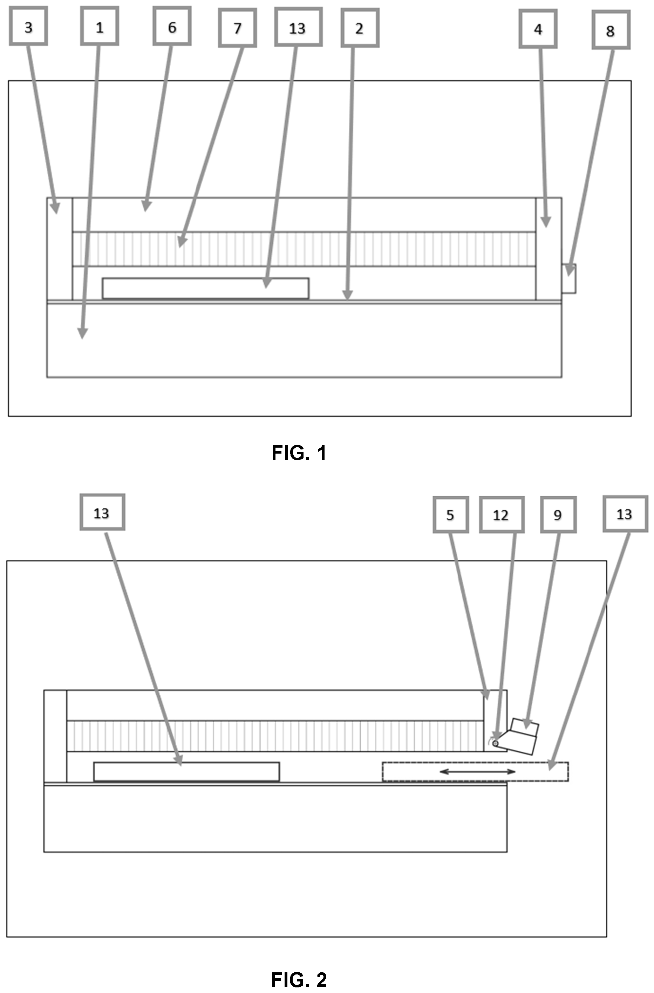

From a structural standpoint, the upper extraction tunnel comes in two mounting variants:
- between two fixed vertical posts, with the upper parts of these posts equipped with drive cylinders for the vertical movement of the tunnel. In this case, the right post is equipped with a fixed extraction branch used to connect to the extraction device,
- by overhung suspension of the upper extraction tunnel between a single fixed post (usually the left one) and the freely positioned right side, with a hinged extraction branch located on the right side. This solution allows for the preservation of free space in the work area for material handling, see Fig. 2.

In both of the above-mentioned variants, pressure losses occur when air is routed through the lowered upper extraction tunnel - both when routed via a fixed post and when connected to a hinged extraction branch. These pressure losses negatively affect the efficiency of dust and sawdust extraction from the saw's work area. To eliminate them, a more powerful extraction device must be installed, which results in higher electricity consumption.

### Essence of the Invention

The essence of the invention is the integration of a hinged flap directly into the upper extraction tunnel of saws for longitudinal cutting. This flap serves to more effectively seal off the extraction space in the cutting area, thereby reducing pressure losses and increasing the efficiency of dust and sawdust extraction.

In combination with the upper extraction branch, the flap forms a universal extraction element, the position of which can be variable depending on the requirements of a specific operation. The flap is mounted so that it can be tilted using a rotating element of the hinged extraction branch, both to ensure functionality and to enhance operator safety. Before the cutting blade enters the cut, the extraction tunnel with this integrated flap must be lowered.

The device is structurally integrated into the upper extraction tunnel of the longitudinal circular saw.

The upper extraction tunnel consists of a support element in the form of a weldment, which is mounted so that it can move in the vertical direction. Adaptable protective slats are attached to its sides; their function is to create an enclosed space around the material being cut during the cutting process.

The hinged flap is thus located within the upper extraction tunnel and serves to seal off this space laterally. At the same time, it directs the flow of extracted air and particles directly toward the extraction branch. The flap consists of a sheet metal element that is pivotally mounted to the structure of the upper extraction tunnel via a flap pivotal element, primarily through a pin connection.

The flap is lowered either by gravity, by a spring, or by a pneumatic cylinder. The lower dead center of the flap - that is, its landing on the machine table - is monitored by a safety circuit that allows the cutting process to begin.

Based on practical tests conducted, we found that the extraction efficiency during material cutting on a machine with a working length of 5.2 m increased by up to 30%. This significant increase in efficiency is the result of a design improvement in the form of this integrated flap, which is located directly in the extraction tunnel. The flap optimizes airflow at the extraction point, ensuring more efficient capture of dust and dirt as soon as they are generated.

Thanks to this solution, the required extraction efficiency can be achieved even when using a device with lower extraction capacity. This not only results in significant energy savings but also reduces operating costs and contributes to more environmentally friendly operation. An additional benefit is a cleaner work environment, improved health protection of workers, and extended service life of machinery due to lower dust levels.

The importance of this design feature becomes even more apparent in cases where the extraction tunnel is extended to accommodate longer versions of these longitudinal circular saws (up to 16.2 m). In such situations, it is possible to install an additional extraction flap into the system, which again significantly increases efficiency. Here, extraction efficiency increases significantly - by 50 to 200 percent - depending on the working length of the machine. This makes it possible to maintain a high standard of filtration even with an extended or complex extraction system, which would not be possible without this flap even with a significant increase in the capacity of the central extraction device.

### Overview of Figures in the Drawings

Fig. 1 shows a saw for longitudinal cutting (schematically) according to the prior art with the upper extraction tunnel in its basic position;
Fig. 2 shows a saw for longitudinal cutting (schematically) according to the prior art with the upper extraction tunnel in its basic position, in an overhung suspension design;

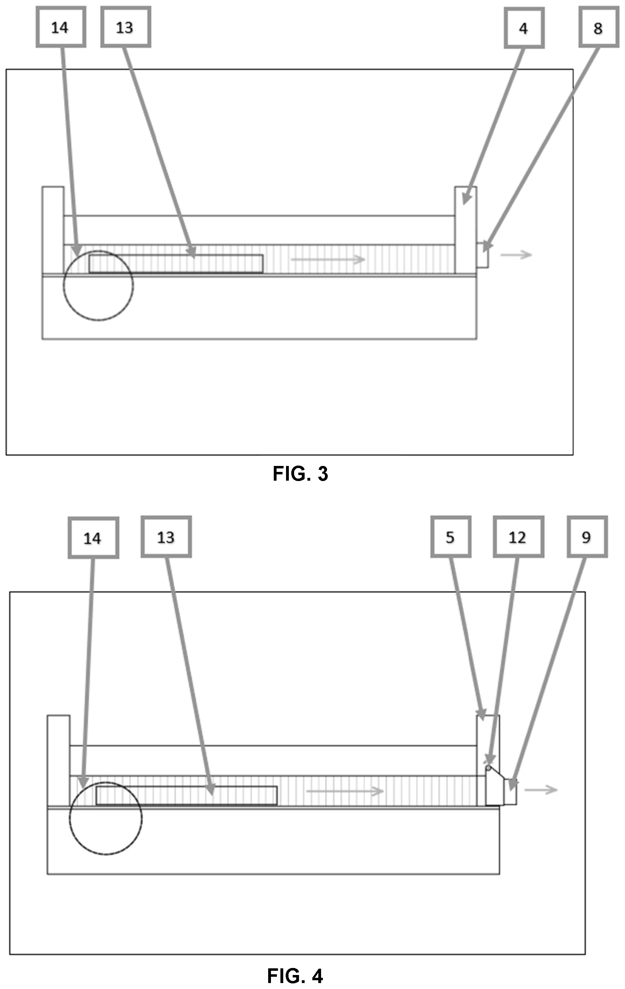

Fig. 3 shows a saw for longitudinal cutting (schematically) according to the prior art with the upper extraction tunnel in the cutting position;
Fig. 4 shows a saw for longitudinal cutting (schematically) according to the present invention with the upper extraction tunnel in the cutting position, in a design featuring a hinged extraction branch and a fixed post;

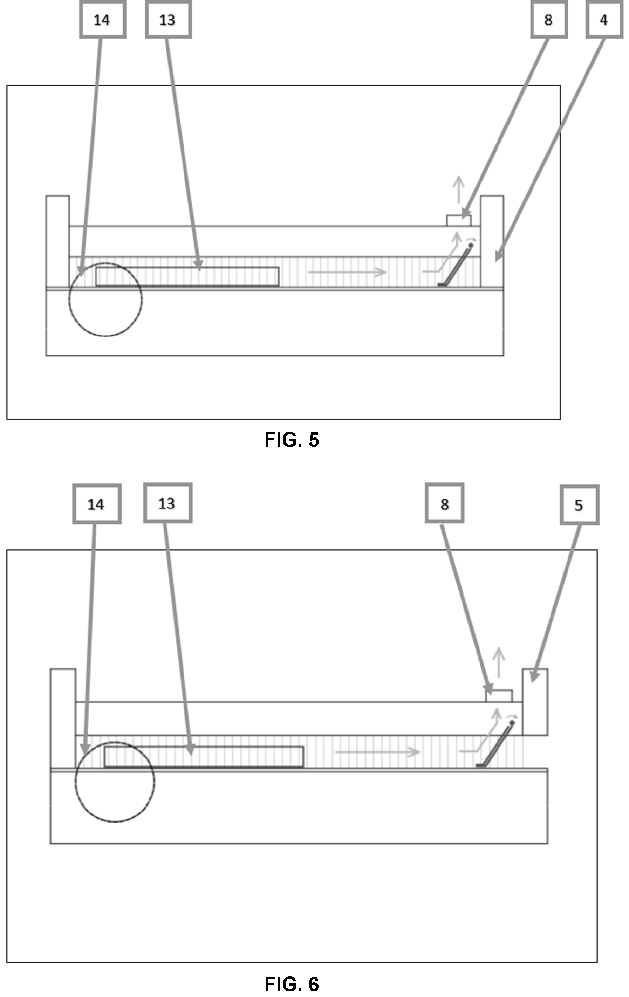

Fig. 5 shows a saw for longitudinal cutting (schematically) according to the present invention with the upper extraction tunnel in the cutting position, in a design featuring an integrated flap and a fixed post;
Fig. 6 shows a saw for longitudinal cutting (schematically) according to the present invention with the upper extraction tunnel in the cutting position, in a design featuring an integrated flap and overhung suspension of the extraction tunnel;

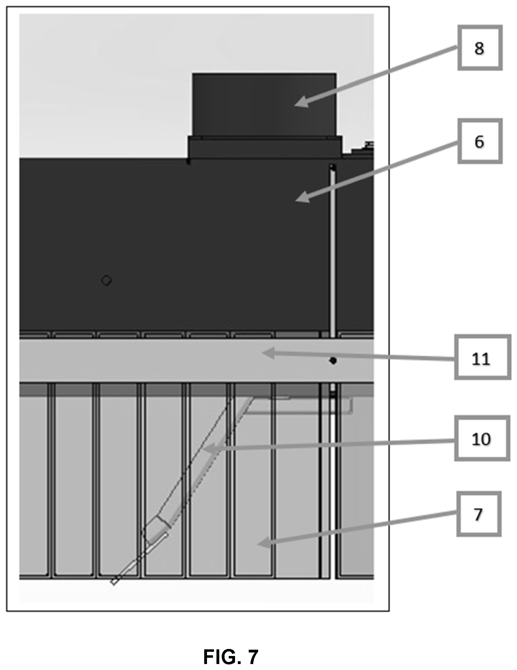

Fig. 7 shows a detailed solution of the integrated flap in the upper extraction tunnel of a saw for longitudinal cutting (in the cutting position).

### Examples of Embodiments of the Invention

### Example 1

The integrated flap 10 in the extraction tunnel is mounted so that it can be tilted in the upper extraction tunnel 6 of the longitudinal circular saw for longitudinal cutting and crosscutting of material. The woodworking machine consists of a pair of posts 3, 4 between which the upper extraction tunnel 6 is mounted; it also includes a table 2 for holding material, protective slats 7, and the upper extraction branch 8 for extracting dust and sawdust accumulated in the upper extraction tunnel 6. This flap 10 serves to more effectively seal off the extraction space in the cutting area, thereby reducing pressure losses and increasing the efficiency of dust and sawdust extraction. In combination with the upper extraction branch 6 and the adaptable protective slats 7, the flap 10 forms a universal extraction element, the position of which can be variable depending on the requirements of a specific machine design. The flap 10 is mounted so that it can be tilted, both to ensure functionality and to enhance operator safety. Before the cutting blade 14 enters the cut, the extraction tunnel 6 with this integrated flap 10 must be lowered.

The upper extraction tunnel 6, or a duct, consists of a support element in the form of a weldment, which is mounted so that it can move in the vertical direction. Adaptable protective slats 7 are attached to its sides; their function is to create an enclosed space around the material being cut during the cutting process. The hinged flap 10 is thus located within the upper extraction tunnel 6 and serves to seal off this space laterally. At the same time, it directs the flow of extracted air and particles directly toward the extraction branch 8.

The flap 10 itself consists of a sheet metal element that is pivotally mounted to the structure of the tunnel 6 via a pivotal element 11, with the pivotal element 11 being primarily a pivot pin. The flap 10 is lowered either by gravity, by a spring, or by a pneumatic cylinder. The lower dead center of the flap, i.e. its landing on the machine table, is monitored by a safety circuit that allows the cutting process to begin.

### Example 2

The integrated flap 10 as in Example 1, with the difference that it is mounted in the upper extraction tunnel 6 of the longitudinal circular saw between a pair of posts 3, 5, where the post 5 does not touch the table 2 and serves for overhung suspension and to allow free movement of the material being cut 13.

### Example 3

A woodworking machine equipped with more than one integrated flap 10 as described in Example 1 or 2.

### Industrial Applicability

The device can be used in the field of woodworking machinery; specifically, it provides a universal solution for the extraction point of the upper extraction tunnel on circular saws for longitudinal cutting.

### List of Reference Signs:

- 1: - lower part of the machine
- 2: - machine table
- 3: - left post
- 4: - right post
- 5: - right post for overhung suspension
- 6: - upper extraction tunnel
- 7: - protective slats
- 8: - extraction branch
- 9: - hinged extraction branch
- 10: - flap
- 11: - pivotal element of the flap
- 12: - pivotal element of the hinged extraction branch
- 13: - material being cut
- 14: - saw blade

## Claims

1. An integrated flap (10) of an extraction tunnel for a woodworking machine, which comprises a lower part (1) of the machine with a table (2) for holding the material being machined, a pair of columns (3, 4) or columns (3, 5), between which the upper extraction tunnel (6) is mounted; it further comprises protective adjustable slats (7) and an upper extraction branch (8) for dust extraction, **characterized in that** the flap (10) is mounted so that it can be tilted within the upper extraction tunnel (6) of the machine at the location of the extraction branch (8) which is also mounted in the upper extraction tunnel (6).

2. An integrated flap (10) according to claim 1, **characterized in that** it consists of a sheet metal body that is mounted pivotally to the tunnel structure (6) by means of a pivotal element (11).

3. An integrated flap (10) according to claim 2, **characterized in that** the pivotal element (11) is a pivot pin or a bearing.

4. An integrated flap (10) according to any of the claims 1 to 3, **characterized in that** to secure the flap (10) in its basic position at its lower dead center, the flap (10) is lowered either by gravity, by a spring, or by a pneumatic cylinder.

5. An integrated flap (10) according to any claim 1 to 3, **characterized in that** to secure the flap (10) in its basic position at its lower dead center, the flap (10) is lowered either by gravity, by a spring, or by a pneumatic cylinder.
